Europäisches Patentamt

European Patent Office

Office européen des brevets

(19)

(11) Veröffentlichungsnummer: **0 242 489 B1**

## (12) EUROPÄISCHE PATENTSCHRIFT

(45) Veröffentlichungstag der Patentschrift: **10.07.91**

(21) Anmeldenummer: **86810177.5**

(22) Anmeldetag: **17.04.86**

(51) Int. Cl.⁵: **B28D 7/04**, B25B 11/00, //B28D5/02

(54) **Verfahren zum Trennen eines Stabes in Teilstücke, Trennschleifmaschine zur Durchführung dieses Verfahrens und Verwendung dieser Trennschleifmaschine.**

(43) Veröffentlichungstag der Anmeldung:
28.10.87 Patentblatt 87/44

(45) Bekanntmachung des Hinweises auf die Patenterteilung:
10.07.91 Patentblatt 91/28

(84) Benannte Vertragsstaaten:
**CH DE FR GB IT LI NL**

(56) Entgegenhaltungen:
EP-A- 0 079 744
DE-A- 1 646 147
FR-A- 2 360 488
US-A- 3 969 004

(73) Patentinhaber: **Maschinenfabrik Meyer & Burger AG
Alte Bernstrasse 146a
CH-3613 Steffisburg(CH)**

(72) Erfinder: **Zoebeli, Armin
Aumattweg 46
CH-3613 Steffisburg(CH)**

(74) Vertreter: **Steiner, Martin et al
c/o AMMANN PATENTANWÄLTE AG BERN
Schwarztorstrasse 31
CH-3001 Bern(CH)**

## Beschreibung

Die vorliegende Erfindung betrifft ein Verfahren zum Trennen eines Stabes in Teilstücke und insbesondere Scheiben, mittels einer Trennschleifmaschine, gemäss Oberbegriff des Anspruchs 1. Ein solches Verfahren bzw. eine Trennschleifmaschine zum Trennen von Stäben aus hartem Material, beispielsweise Silizium, in dünne Scheiben (wafers) ist aus der EP-A-0 079 744 bekannt. Diese Trennschleifmaschine ist als Innentrennsäge ausgebildet, bei welchen der verdickte innere Rand einer ringförmigen, rotierenden Trennscheibe mit Hilfe von Schleifmittel den Stab durchtrennt. Besondere Probleme ergeben sich bei der Uebernahme der vom Stab getrennten dünnen Scheiben des harten, relativ spröden Materials mittels der Entnahmevorrichtung, deren Saugkopf auf einen bestimmten Abstand von der Scheibe angenähert wird und diese ansaugt. Dadurch werden im Augenblick des Durchtrennens des Stabes von der Uebernahmevorrichtung auf die erfasste Scheibe zu hohe Restkräfte in irgendeinem Sinne ausgeübt, und es besteht die Gefahr eines Ausbruchs am Rande der Scheibe oder des Stabes unmittelbar vor der vollständigen Trennung der Scheibe vom Stab. Da jedoch solche Ausbrüche nicht annehmbar sind, wird auf die Stäbe längs einer Mantellinie eine stabförmige Schneidunterlage aus weichem Material aufgegossen oder aufgeklebt, und zwar an derjenigen Stelle, an welcher die Trennscheibe nach jedem Schnittvorgang aus dem Stab austritt. Es muss dann auch noch die Schneidunterlage durchgetrennt werden, um die erzeugte Scheibe entnehmen zu können. Schliesslich muss dann jede Scheibe noch von dem an ihr haftenden Teilstück der Schneidunterlage getrennt werden. Dieses Vorgehen kostet Material und Zeit und kann somit nicht befriedigen.

Ziel der vorliegenden Erfindung ist es, ein Verfahren und eine Trennschleifmaschine zu schaffen, welche ein fehlerfreies Trennen von Stäben aus hartem, sprödem Material ohne die oben erwähnten Nachteile gestatten. Dieses Ziel wird mit dem Verfahren nach Anspruch 1 bzw. der Trennschleifmaschine nach Anspruch 3 erreicht. Das Anpressen, Positionieren und Orientieren des Saugkopfes kann hierbei schon vor Beginn des Schnittvorgangs oder bis höchstens etwa halber Schnitttiefe erfolgen, damit noch eine präzise Orientierung des Saugkopfes ohne jede Verformung des schon freigeschnittenen Teils der Scheibe erfolgen kann. Ein genaues Orientieren des Saugkopfes an der freien Stirnfläche des Stabes ist jedenfalls erforderlich beim ersten Schnitt oder nach erfolgter Aenderung der Orientierung des Stabes, nach welcher die freie Stirnfläche nicht mehr genau parallel ist zur Trennebene. Dank der genauen Positionierung und Orientierung des festgesaugten Saugkopfes an der freien Stirnfläche des Stabes und dank der nachfolgenden Entlastung, haftet der Saugkopf am Ende des Trennvorganges kräftefrei am Stab bzw. am abgetrennten Werkstück, so dass keine Gefahr des Ausbrechens besteht, selbst wenn ohne Schneidunterlage gearbeitet wird. Es kann also jedenfalls ohne die übliche, steife Schneidunterlage gearbeitet werden, die ebenfalls durchgetrennt werden muss, aber es kann nötigenfalls statt dessen eine dünne Folie vorgesehen werden, welche einen direkten Kontakt zwischen dem Stab und seiner Auflage vermeidet und auch einem Materialausbruch am Ende des Trennvorgangs entgegenwirkt. Der Saugkopf kann einen Kranz von einzelnen, vorzugsweise starren, Saugdüsen aufweisen, damit eine optimale Ausrichtung des Saugkopfes an der freien Stirnfläche des Stabes erfolgt. In einer anderen Ausführungsform könnten nur drei Saugdüsen vorgesehen sein, damit eine statisch bestimmte, gleichmässige Auflage all dieser Düsen sichergestellt ist.

Das Andrücken des Saugkopfes zu dessen Positionierung und Orientierung an der Stirnfläche des Stabes erfolgt vorzugsweise durch ein Druckmittel, derart dass nach dem Aufheben des Druckes der Saugkopf praktisch kräftefrei an der Stirnseite des Stabes bzw. an der entstehenden Scheibe haftet. Das Orientieren wird unterstützt durch Einschalten des Vakuums zum Festsaugen des Saugkopfes bevor der Andruck desselben aufgehoben wird.

Um eine möglichst starre gegenseitige Lage des Stabes und der Entnahmevorrichtung zu gewährleisten, wird die Trennschleifmaschine vorzugsweise derart konzipiert, dass die Werkstückaufnahme und der Saugkopf während des Schnittvorganges in starrer gegenseitiger Lage auf einem gemeinsamen Maschinengestell angeordnet sind, während das Schneidorgan, z.B. eine Innentrennscheibe, den Schnittvorschub ausführt. Bei bekannten Trennschleifmaschinen ist die Trennscheibe in einem feststehenden Maschinenteil gelagert, während die Werkstückaufnahme die Vorschubbewegung während des Schnittvorganges erzeugt. Eine derartige gegenseitige Bewegung der Werkstückaufnahme bezüglich des Saugkopfes könnte zu unerwünschten Relativbewegungen zwischen dem Werkstück und dem Saugkopf führen, was zu Spannungen und zum Ausbrechen des Teilstückes oder des Werkstückes am Ende des Schnittvorganges führen könnte.

Die Erfindung betrifft auch eine Verwendung der Trennschleifmaschine gemäss Anspruch 11. Das elastische, vorzugsweise druckmittelgesteuerte Anlegen des Saugkopfes an das Werkstück gestattet innerhalb gewisser Grenzen ein korrektes Anlegen des Saugkopfes mit angemessenem Druck, unabhängig von der genauen Lage der freien Stirnseite des Werkstückes bzw. unabhängig von der Dicke der abzutrennenden Teilstücke. Es können daher Teilstücke beliebiger Dicke produziert werden, indem der Saugkopf selbsttätig die erforderliche Entnahmeposition erreicht.

Im folgenden wird ein Ausführungsbeispiel einer erfindungsgemässen Trennschleifmaschine und des damit durchgeführten Trennverfahrens näher erläutert.

Fig. 1    zeigt eine Draufsicht auf die Trennschleifmaschine, teilweise geschnitten,

Fig. 2    zeigt eine Seitenansicht der Trennschleifmaschine, teilweise geschnitten,

Fig. 3    zeigt eine Stirnansicht der Trennschleifmaschine von der Entnahmeseite, teilweise geschnitten,

Fig. 4    zeigt eine Stirnansicht des Saugkopfes,

Fig. 5    zeigt einen Schnitt nach Linie V in Fig. 4 durch den Saugkopf, und

Fig. 6    zeigt ein Schema zur Erläuterung der Arbeitsweise der Maschine.

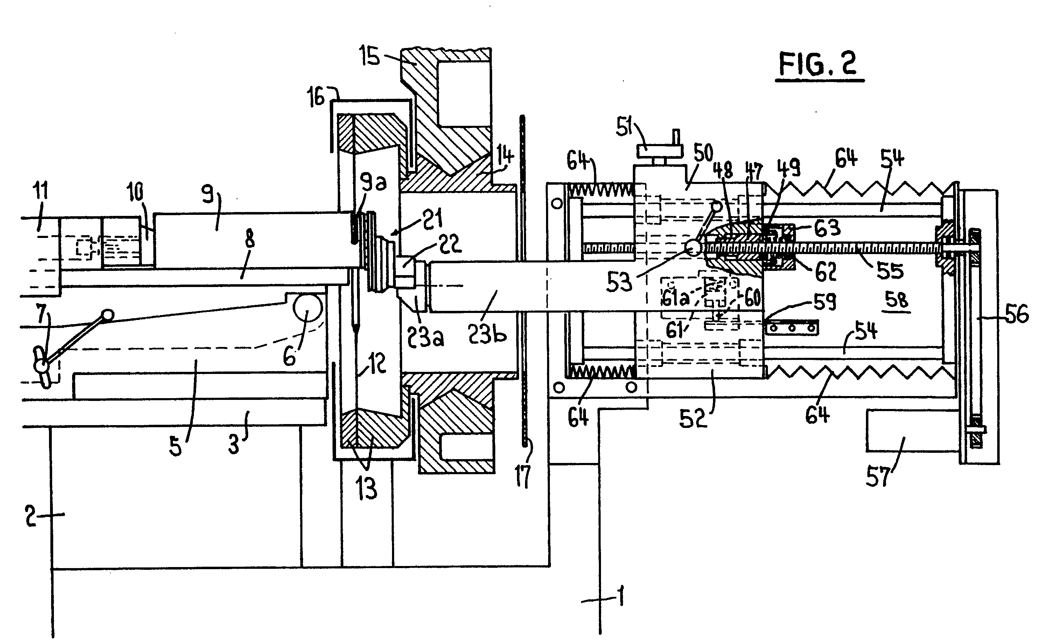

Die Trennschleifmaschine weist gemäss Fig. 2 einen starren Maschinenständer 1 auf. Ein mit dem Ständer 1 starr verriegelter Schwenkträger 2 kann um eine Achse 4 ausgeschwenkt werden nach Lösen einer nicht dargestellten Verriegelung, damit ein gute Zugang zur Trennscheibe möglich wird. Auf einer mit dem Schwenkträger 2 starr verbundenen Auflageplatte 3 ist ein Aufnahmeträger 5 schwenkbar angeordnet. Er dient der Werkstückorientierung in horizontaler Richtung um eine nicht dargestellte Achse, und kann in der gewünschten Position durch nicht dargestellte Mittel geklemmt werden. Im Aufnahmeträger 5 ist ein Tisch 8 um eine Horizontalachse 6 schwenkbar und mittels Klemmhebel 7 arretierbar angeordnet. Auf dem Tisch 8 liegt das Werkstück 9, beispielsweise ein Siliziumstab, direkt auf, d.h. ohne Schniedunterlage. Je nach Bedarf kann aber am Werkstück 9 eine Folie aufgeklebt sein, damit das Werkstück durch das Schieben auf dem Tisch 8 durch diesen nicht beschädigt wird, und damit beim Austritt der Trennscheibe 12 aus dem Werkstück bei gewissen Werkstoffen nicht kleine Ausbrüche erfolgen können. Die Folie kann z.B. eine Dicke von 0,1 bis 1 mm aufweisen. Das Werkstück 9 ist mit einem Adapter 10 verbunden, der seinerseits lösbar mit einem Zustellschlitten 11 verschraubt ist, mittels welchem das Werkstück über den Tisch 8 schrittweise zugestellt we rden kann, um einzelne Teilstücke, insbesondere Scheiben, vom stabförmigen Werkstück 9 abzutrennen. Die bisher beschriebene Anordnung, mit Ausnahme der direkten Auflage des Werkstücks 9 auf den Tisch 8 der Werkstückaufnahme, entspricht an sich üblichen Ausführungen bei derartigen Trennschleifmaschinen.

Die ringförmige Trennscheibe 12 ist in einem schematisch dargestellten, zweiteiligen Ring 13 gespannt, welcher Ring 13 Teil eines Rotors 14 ist. Dieser Rotor ist in einer Wippe 15 drehbar gelagert, beispielsweise mittels eines aerostatischen Lagers, und der Rotor kann mittels eines nicht dargestellten Motors angetrieben werden. Die Ausbildung des Rotors und der ringförmigen Innentrennscheibe 12 sind an sich bei derartigen Maschinen bekannt und bedürfen keiner näheren Erläuterung. In der Zeichnung sind schematisch auch Gehäuseteile bzw. Schutzvorrichtungen 15, 16, und 17 schematisch angedeutet.

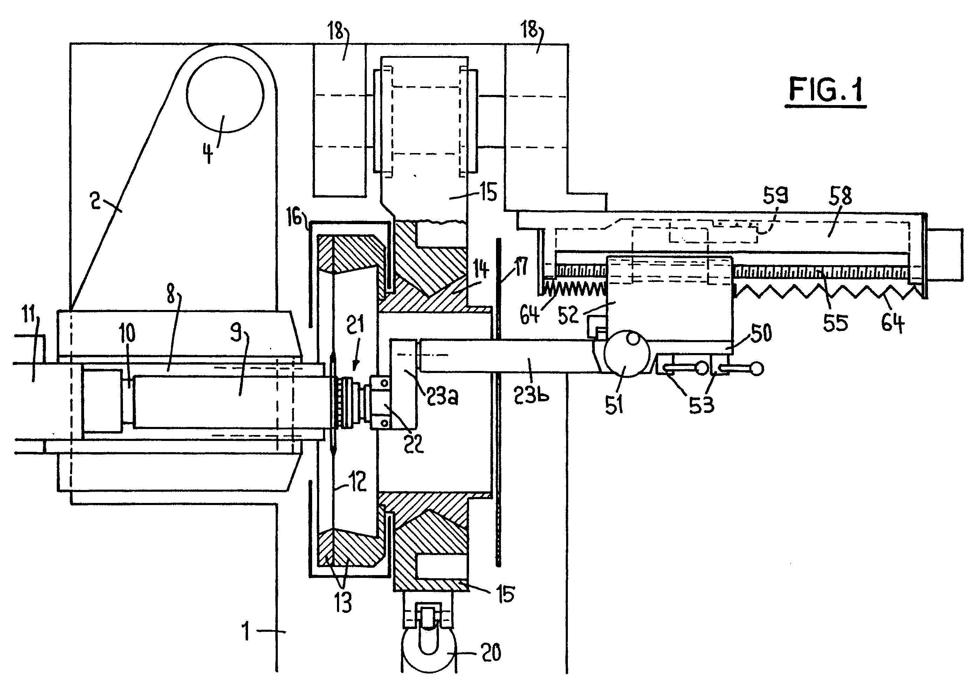

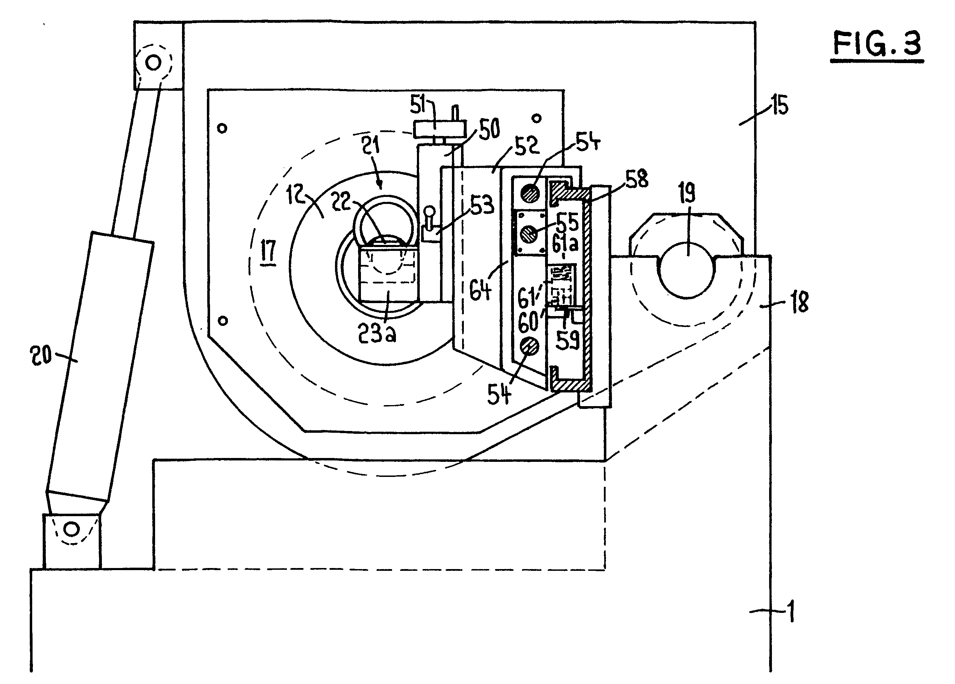

Die Wippe 15 ist, wie insbesondere die Figuren 1 und 3 zeigen, in Lagerböcken 18 des Maschinenständers um eine Achse 19 schwenkbar gelagert, und sie kann mittels eines hydraulischen Zylinders 20 um die Achse 19 verschwenkt werden. Die Schnittbewegung bzw. der Schnittvorschub wird also durch Verschwenken der Wippe und damit Absenken der Trennscheibe 12 auf das Werkstück 9 bzw. durch das Werkstück 9 bewirkt. Wie erwähnt, hat diese Ausführung den besonderen Vorteil, dass die oben beschriebene Werkstückaufnahme sowie die noch zu beschreibende Entnahmevorrichtung für abgetrennte Teilstücke während des Schnittvorganges keine Relativbewegung ausführen müssen, und somit ihre gegenseitige Lage durch die direkte starre Verbindung über den gemeinsamen Maschinenständer 1 unverrückbar festgelegt ist.

Die Entnahmevorrichtung weist einen Saugkopf 21 auf, der mittels eines Anschlusstückes 22 auswechselbar an einem Trägerarm befestigt ist, welcher Trägerarm einen mit dem Saugkopf 21 verbundenen vorderen Teil 23a aufweist, welcher gegenüber einem hinteren Teil 24b in später ausführlich beschriebener Weise schwenkbar angeordnet ist. Normalerweise sind jedoch die Armteile 23a und 23b in bestimmter Lage starr miteinander verbunden und bestimmen eindeutig die Lage des Saugkopfes 21.

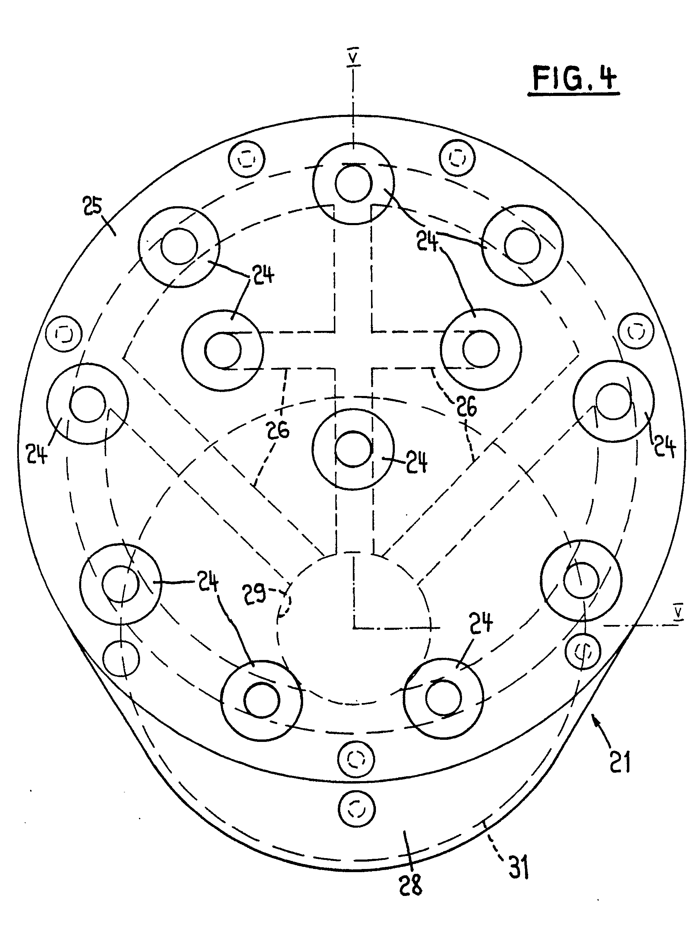

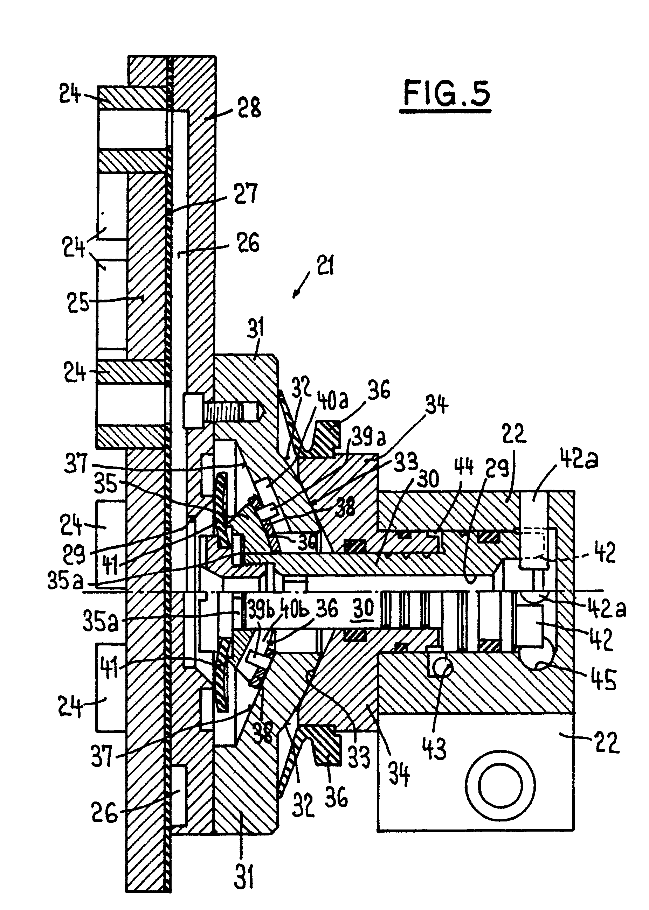

Der Aufbau des Saugkopfes 21 und seines Anschlussteils 22 ist in den Figuren 4 und 5 näher dargestellt. Der Saugkopf weist einen kreisrunden Kranz von Saugdüsen 24 auf, die in eine kreisförmige Platte 25 eingesetzt sind. Sie weisen äussere, freiliegende genau bearbeitete Stirnflächen auf, die zur Anlage bzw. zum Festsaugen an der frei zugänglichen gegenüberliegenden Stirnfläche des Stabes 9 geeignet sind, wie in den Figuren 1 und 2 angedeutet.

Die Bohrungen der Saugdüsen 24 stehen in Verbindung mit in die Platte 28 gefrästen Vakuumkanälen 26, die durch eine zwischen der Platte 25 und der Platte 28 liegende Dichtungsplatte 27 abgedichtet sind. Alle Vakuumkanäle 26 stehen direkt oder indirekt in Verbindung mit der axialen Bohrung 29 eines hülsenartigen Klemmkolbens 30. Die Platte 28 ist fest verschraubt mit einem Montageteller 31 mit sphärischer Auflagefläche 32, die gegen eine konische Auflagefläche 33 eines Gehäuseteils 34 anliegt. Der Gehäuseteil 34 ist dicht und fest verbunden mit dem Anschlussteil 22. Auf dem Klemmkolben 30 ist ein Klemmring 35 mit einer sphärischen Klemmfläche 36 befestigt. Zwischen diesem Klemmring 35 und einer konischen Fläche 37 des Montagetellers 31 ist ein sphärisch gebogener, flacher Kupplungsteil 38 eingelegt, welcher in der einen Ebene (Fig. 5 oben) mit Zapfen 39a in Nuten 40a des Montagetellers 31 greift, während er in der anderen Ebene (Fig. 5 unten) mit entsprechenden Zapfen 39b in Nuten 40b des Klemmrings 35 greift. Es ist damit eine kardanische Verdrehsicherung oder Kupplung zwischen dem Klemmring 35 und dem Montageteller 31 erzielt. Der Klemmring 35 ist mittels Einlegefederkeilen 35a in bestimmter Orientierung auf dem Klemmkolben 30 gehalten, und das gegenüberliegende Ende des Klemmkolbens 30 ist mittels einer Nute 42 und eines Stiftes 42a des Anschlussteils 22 gegen Drehung gesichert. Durch einen Einlass 43 kann Druckmedium in den Raum 44 zwischen dem Gehäuseteil 34 und dem als Kolben wirkenden verdickten Ende des Klemmkolbens 30 eingelassen werden, um auf den Klemmkolben eine in Figur 5 nach rechts gerichtete Kraft auszuüben. Durch einen weiteren Einlass 45 kann Vakuum im Kanal 29 und durch die Kanäle 26 in den Saugdüsen 24 erzeugt werden. Zwischen dem Klemmring 35 und der Platte 28 ist eine Dichtungsmanschette 41 eingelegt, welche einen Verlust von Vakuum verhindert. Zwischen dem Montageteller 31 und dem Gehäuseteil 34 ist eine möglichst weiche Schmutzdichtung 36 angeordnet.

Der Montageteller 31 und der Gehäuseteil 34 bilden mit ihren sphärischen bzw. konischen Flächen 32 und 33 ein Kugelgelenk zwischen den fest montierten Teilen 22 und 34 und dem Saugkopf 21. Im dargestellten Zustand, wo der Druckraum 44 drucklos ist und der Klemmkolben 30 sich in Ruheposition ganz links befindet, wirkt keine Anpresskraft zwischen den Teilen 31 und 34, so dass sich der Saugkopf 21 unter Ueberwindung nur geringen Widerstandes verschwenken kann. Wird er hierbei gegen die Stirnseite des Stabes 9 angepresst, legt sich der Kranz von Saugdüsen 24 satt gegen die Stirnfläche des Stabes 9 an und der Saugkopf 21 wird damit genau nach der Stirnfläche orientiert. Der Andruck der unteren Saugdüsen 24 ist hierbei höher als der Andruck der oberen Saugdüsen, weil die Druckkraft unterhalb des Zentrums des Kranzes von Saugdüsen angreift, und dies ist erwünscht, wenn das Anpressen des Saugkopfes erst erfolgt, wenn etwa gemäss Figur 2 schon eine gewisse Schnitttiefe erreicht ist. Auf diese Vorgänge wird unten im Zusammenhang nochmals verwiesen. Durch Zuschalten des Vakuums und Festsaugen des Saugkopfes wird eine satte Anlage und genaue Orientierung des Saugkopfes an der Stirnfläche des Stabes 9 unterstützt.

Der Arm 23, welcher den Saugkopf 21 trägt, ist an einem Vertikalschlitten 50 befestigt. Dieser Vertikalschlitten kann mittels einer durch Handrad 51 betätigbaren Spindel an einem Horizontalschlitten 52 vertikal eingestellt und mittels Klemmhebel 53 in der gewünschten Höhe fixiert werden. Der Horizontalschlitten 52 ist auf Stangen 54 horizontal verschiebbar. Die Horizontalverschiebung erfolgt durch eine Spindel 55 die über einen Zahnriemen 56 von einem Motor 57 in beiden Drehrichtungen angetrieben werden kann. An einem seitlich der Führungen 54 bzw. des Horizontalschlittens 52 angeordneten Führungsbett 58 ist in Verschiebungsrichtung des Horizontalschlittens 52 ein Blech 59 angeordnet, mit welchem die Kolbenstange 60 eines Klemmzylinders 61 zusammenarbeiten kann um den Horizontalschlitten in einer erreichten Arbeitsstellung zu blockieren.

Die mit der Spindel 55 zusammenarbeite Mutter ist als Kolben 47 in einer Zylinderbohrung ausgebildet. In den Ringraum 48 zwischen dem weiteren dichtenden Ende des Kolbens 47 und der inneren ringförmigen Zylinderwand kann ein Druckmedium eingeleitet werden, welches den Horizontalschlitten 52 gegenüber dem Kolben bzw. der Spindelmutter 47 nach links in Fig. 2 zu verschieben trachtet, und damit den Saugkopf 21 mit einer bestimmten Kraft, aber elastisch und nachgiebig, gegen die Stirnseite des Stabes 9 anzupressen gestattet, Bei Verschiebung der Spindelmutter 47 nach rechts in Fig. 2 wird der Horizontalschlitten 52 und die damit verbundenen Teile über einen Anschlagring 49 eine Schraubenfeder 62 und eine mit dem Horizontalschlitten verbundenen Büchse 63 nach rechts in Fig. 2 mitgenommen. In beiden Richtungen wirkt somit eine elastische Verbindung, welche einen gewissen Ueberlauf der Spindelmutter bzw. des Kolbens 47 über eine Anschlagposition hinaus erlaubt.

Durch das Führungsbett 58 und je einen Faltenbalg 64 sind die Führungsstangen 54 und die darauf verschiebbaren Führungen sowie der Mechanismus des Horizontalschlittens geschützt.

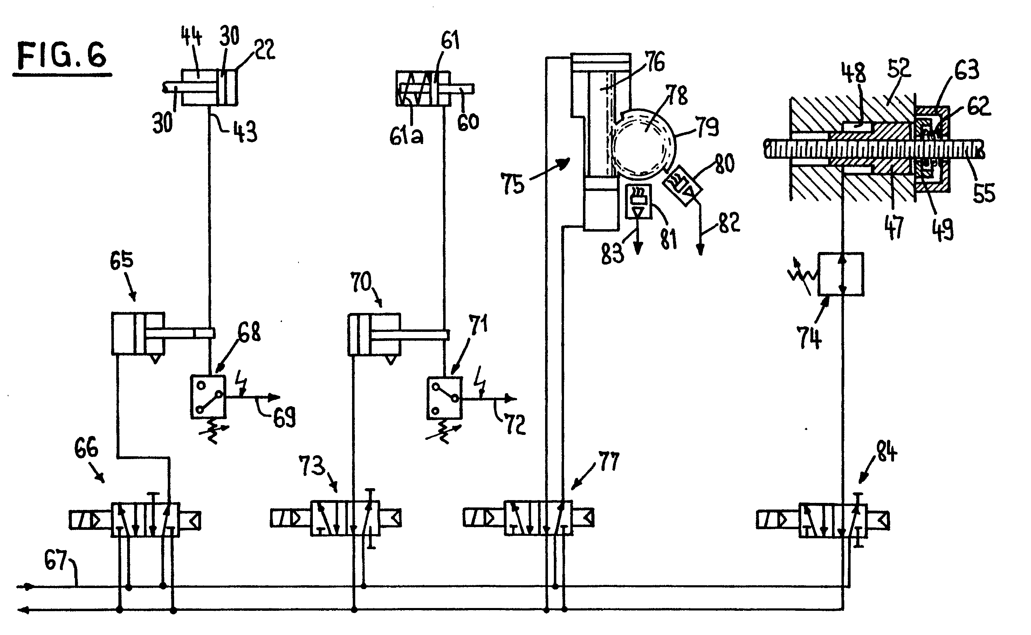

Fig. 6 zeigt ein hydro-pneumatisches Schema, in welchem entsprechende Teile gleich bezeichnet sind wie in den übrigen Figuren, wobei allerdings die Maschinenelemente rein schematisch dargestellt sind. Der Einlass 43 kann mit Druckmittel aus einem Druckmittelverstärker 65 gespeist werden. Dieser Druckmittelverstärker kann seinerseits über ein Umsteuerventil 66 entweder mit Druckmittel aus einer Versorgungsleitung 67 beaufschlagt werden oder von der Druckmittelquelle getrennt werden.

Erreicht der Druck auf der Hochdruckseite, das heisst am Einlass 43, den Betriebsdruck, wird ein Druckschalter 68 betätigt und liefert über eine Leitung 69 ein Bestätigungssignal. Der Klemmzylinder 61 kann ebenfalls über einen Druckverstärker 70 gespeist werden, mit dem auf der Hochdruckseite ebenfalls ein Druckschalter 71 verbunden ist, der ein Bestätigungssignal über eine Leitung 72 übermitteln kann, wenn der Betriebsdruck vorhanden ist bzw. fehlt. Die Steuerung erfolgt über ein Umsteuerventil 73. Die Druckmittelzufuhr zum Zylinderraum 48 erfolgt über einen einstellbaren Druckregler 74 und ein Umsteuerventil 84. Es ist ferner ein umsteuerbarer, pneumatischer Zylinder 75 vorgesehen, welcher eine Zahnstange 76 wahlweise in die eine oder andere Endlage zu bringen gestattet. Die Steuerung erfolgt über ein Umsteuerventil 77. Die Zahnstange 76 kämmt mit einem Zahnrad 78, welches mit dem beweglichen Teil 23a des den Saugkopf 21 tragenden Armes gekuppelt ist. Durch Betätigung des Zylinders 75 in der einen oder anderen Richtung kann der Armteil 23 mit dem Saugkopf 21 aus einer Betriebsposition in eine wirksame Position weggeschwenkt werden, um Platz zu schaffen für eine andere, nicht dargestellte Entnahmevorrichtung, die beispielsweise dazu dienen kann, grössere Teilstücke zu entnehmen und abzuführen. Mit einem Steuersegment 79 am Zahnrad 78 arbeiten Detektoren 80 und 81 zusammen, um über Leitungen 82 bzw. 83 Bestätigungssignale über die Position des Teils 23a bzw. des Saugkopfes zu übermitteln.

Die Arbeitsweise der dargestellten Maschine ist wie folgt:
Die Figuren 1, 2 und 6 zeigen den Zustand während des Schnittvorganges. Wie Figur 2 zeigt, ist die Trennscheibe 12 etwa zur Hälfte in den Stab 9 eingedrungen. Der Saugkopf 21 ist an der Stirnseite des Stabes 9 bzw. einer schon teilweise freigeschnittenen Scheibe 9a festgesaugt. Der Druckraum 44 steht über das Ventil 66 und den Druckverstärker 65 unter Druck, so dass der Klemmkolben 30 in Figur 5 nach rechts gepresst wird. Damit wird über den Druckring 35 auch der Teller 31 mit seiner sphärischen Fläche 32 gegen die konische Fläche 33 des Gehäuseteils 34 angedrückt, und der Saugkopf 21 ist damit in eindeutiger Lage starr mit dem Anschlussteil 22 und dem Arm 23 verbunden. Der Druckraum 48 ist gemäss Figur 6 drucklos, und da die Spindelmutter 47 ohne jede Dichtung frei im Horizontalschlitten 52 geführt ist, ist dieser Schlitten und die damit verbundenen Teile völlig entlastet. Der Saugkopf 21 übt somit keine oder nur eine sehr geringe Kraft auf den Stab 9 bzw. die Scheibe 9a aus. Der Zylinder 61 ist druckfrei, so dass der Bremskolben 60 durch die Feder 61a gegen die Fahne 59 angedrückt wird, und damit den Horizontalschlitten 52 und die damit verbunden Teile in ihrer Stellung blockiert. Anschliessend wird die Spindelmutter 47 durch kurzzeitiges Einschalten des Motors in Fig. 2 nach rechts verschoben, um die Feder 62 zu komprimieren.

In dieser Position verbleibt die Entnahmevorrichtung bis die Scheibe 9a vollständig vom Stab 9 getrennt ist. Im Augenblick des Durchtrennes wirken praktisch keine Kräfte auf die abgetrennte Scheibe 9a, und es erfolgt auch keinerlei Relativverschiebung zwischen dieser Scheibe bzw. dem Saugkopf 21 und dem Stab 9, denn diese Teile stehen über den Maschinenständer 1 in starrer gegenseitiger Verbindung, indem der Schnittvorschub der Trennscheibe 12 durch Schwenken der Wippe 15 erzeugt wird. Es erfolgt somit eine saubere Durchtrennung mit ebenen Schnittflächen, sowohl am Stab 9 als auch an der Scheibe 9a.

Nach erfolgter Trennung der Scheibe 9a vom Stab 9, kann der Stab 9 mittels des Schlittens 11 zurückgezogen werden; ebenso wird die Scheibe 9a zurückgezogen, indem das Ventil 73 umgesteuert und somit der Druckverstärker 70 und folglich auch der Zylinder 61 unter Druck gesetzt werden. Der Klemmkolben 60 wird damit von der Fahne 59 abgehoben und gibt den Horizontalschlitten 52 für die Rückzugbewegung frei. Durch die vorgespannte Druckfeder 62 wird der Schlitten 52 und damit der Saugkopf mit der Scheibe 92 um einen kleinen Betrag zurückgezogen. Hierauf wird die Wippe 15 mit der Trennscheibe 12 in die Ausgangsstellung zurückgeführt, wobei die Trennscheibe 12 vollständig aus dem Bereich des Stabes 9 angehoben ist. Gleichzeitig wird der Horizontalschlitten 52 mit dem Arm 23, dem Saugnapf 21 und der vorher abgetrennten Scheibe 9a durch Antrieb der Spindel 55 nach rechts in Figur 1 und 2 bis in eine durch einen nicht dargestellten Anschlagschalter bestimmte Stellung verschoben. Die Position des Horizontalschlittens 52 ist hierbei durch einen mechanischen Anschlag bestimmt und ein eventuelles Weiterlaufen der Spindel bzw. der Spindelmutter 49 ist hierbei dank der Feder 62, welche durch die etwas weiterlaufende Spindel komprimiert wird, ermöglicht. Dann wird die Scheibe 9a in bekannter, nicht dargestellter Weise, übernommen und dann das Vakuum im Saugkopf 21 aufgehoben, so dass die Scheibe 9a übernommen werden kann. Gegebenenfalls kann auch noch eine Verschwenkung des Teils 23a mit der Saugdüse 21 mittels des Zylinders 75 in eine Uebernahmeposition erfolgen, doch ist diese Schwenkung eher für den oben erwähnten Zweck vorgesehen, nämlich Platz zu schaffen für eine andere Entnahmevorrichtung.

Nach erfolgter Uebernahme der Scheibe 9a wird die Spindel 5 im umgekehrten Sinne angetrieben, um den Horizontalschlitten 52 wieder in die in den Figuren 1 und 2 dargestellte Arbeitsstellung zurückzuführen. Zugleich oder vorher ist der Stab 9 mittels des Zustellschlittens 11 um einen Teilschritt in Figur 2 nach rechts verschoben worden, so dass nun die freie vordere Stirnfläche des Stabes 9 in der in Figur 2 gezeigten vordersten Ebene des Stabes bzw. der Scheibe 9a liegt. Es kann somit in der Folge eine neue Scheibe beliebiger Dicke abgetrennt werden. Während des Vorlaufs des Horizontalschlittens 52 nach links in den Figuren 1 und 2 wird in den Druckraum 48 durch Umsteuern des Ventils 84 Druck eingelassen, damit die Spindelmutter 47 gewissermassen über die Druckfeder im Raum 60 den Horizontalschlitten mitnimmt. Wenn somit der Saugkopf 21 mit seinen Saugdüsen 24 auf die freie Stirnfläche des zugestellten Stabes 9 auftrifft, bestimmt der Druck in der Druckkammer 48 den Andruck des Saugkopfes 21 gegen die Stirnfläche des Stabes 9. Schon während des Vorlaufes des Horizontalschlittens 52 in die dargestellte Arbeitsposition wird das Ventil 66 umgesteuert, womit der Druckverstärker 65 und der Druckraum 44 drucklos werden. Der Klemmkolben 30 gibt somit den Druckring 35 frei, so dass die Klemmung des Tellers 31 gegen den Gehäuseteil 34 aufgehoben und der Saugkopf 21 frei beweglich wird. Beim Auftreffen der Saugdüsen des Saugkopfes auf die freie Stirnfläche des Stabes 9 wird somi der Saugkopf genau parallel auf die Stirnfläche ausgerichtet, sofern er nicht ohnehin schon parallel stand. Der Andruck des Saugkopfes 21 gegen den Stab 9 ist hierbei bestimmt durch den Druck in der Druckkammer 48, und ein eventuelles Ueberlaufen der Spindelmutter 59 über eine festgelegte Anschlagposition des Horizontalschlittens 52 bleibt bedeutungslos, weil der Druckraum 48 sozusagen als pneumatische Feder wirkt, welche diese Ueberlaufen gestattet, ohne das der Andruck des Saugkopfes 21 dadurch beeinflusst würde.

Nach erfolgtem Ausrichten wird der Saugkopf 21 evakuiert, damit er sich an die Stirnseite des Stabes 9 ansaugt. Hierauf wird das Ventil 66 wieder umgesteuert, womit in der erwähnten Weise das Kugelgelenk zwischen dem Saugkopf 21 und seinem Träger durch Anpressen des Tellers 31 gegen den Gehäuseteil 34 blockiert wird. Dann wird das Ventil 84 umgesteuert um den Druck aus der Kammer 48 abzulassen. Der Horizontalschlitten 52 geht damit, wie erwähnt, in eine Position, in welcher Drücke und Verformungen aufgehoben sind. Das Blockieren des Kugelgelenkes zwischen dem Saugkopf 21 und dem Anschlusteil 22 bzw. dem Arm 23 kann gegebenenfalls auch erst jetzt erfolgen. Dann wird der Horizontalschlitten 52 durch Umsteuern des Ventils 3 wieder in seiner Arbeitsstellung blockiert. Inzwischen hat der Schnittvorgang schon begonnen oder beginnt jetzt. Es ist damit der dargestellte Ausgangszustand erreicht.

Es ist bisher angenommen worden, das Kugelgelenk zwischen dem Saugkopf 21 und seinem Träger werde während jedes Zyklus gelöst und neu eingestellt. Dieser Vorgang ist jedoch nur dann erforderlich, wenn eine Aenderung der Orientierung des Stabes 9 erfolgt, d.h., wenn das freie Stabende nicht mehr parallel zur Ebene der Trennscheibe 12 steht, oder wenn die erste Scheibe vom Stab abgetrennt wird, da in diesem Fall die freie Stirnfläche ohnehin nicht parallel zur Ebene der Trennscheibe 12 steht. Durch den beschriebenen Aufbau des Antriebes des Horizontalschlittens 52 mit seiner Blockierung ist jedoch auch ohne das erwähnte Kugelgelenk im Saugkopf 21 ein automatisches Positionieren des Saugkopfes 21 nach der jeweiligen Dicke der Scheibe 9a gewährleistet, d.h., es können Scheiben mit unterschiedlicher Dicke ohne Veränderung von Einstellungen am Entnahmesystem entnommen werden.

Durch die Art des Anbaues des Anschlusteiles 22, welches den Saugkopf 21 trägt, besteht die Möglichkeit, den Saugkopf 21 mit dem Kugelgelenk und Anschlusteil 22 auszutauschen, z.B. gegen einen Saugkopf ohne Kugelgelenk.

**Ansprüche**

1. Verfahren zum Trennen eines Stabes (9) in Teilstücke, insbesondere Scheiben (9a) konstanter oder variabler Dicke mittels einer Trennschleifmaschine, wobei die Teilstücke (9a) beim Durchschneiden des Stabes an seinem einen Ende quer zu seiner Längsausdehnung durch einen an einem Träger orientierbaren Saugkopf (21) übernommen und wobei nach erfolgtem Durchschneiden der Saugkopf (21) mit dem Teilstück (9a) vom Stab (9) weggefahren und das Teilstück vom Saugkopf gelöst wird, dadurch gekennzeichnet, dass der an seinem Träger (22, 23) kugelgelenkig orientierbare und klemm- und lösbare Saugkopf (21) in vom Träger gelöstem Zustand gegen die Stirnfläche des Stabes (9) angedrückt und daran festgesaugt und gegenüber dem Träger (22, 23) positioniert und orientiert wird bevor der Schnitt am Stab (9) vollständig ausgeführt ist, worauf der Andruck des Saugkopfes aufgehoben und der Saugkopf (21) an seinem Träger (22, 23) geklemmt wird.

2. Verfahren nach Anspruch 1, dadurch gekennzeichnet, dass ein mit dem Träger (22, 23) verbundener Schlitten (52) nach erfolgter Entlastung an seiner Führung (54) festgeklemmt wird.

3. Trennschleifmaschine, insbesondere Innentrennsäge, zur Durchführung des Verfahrens nach Anspruch 1, mit einer Werkstückaufnahme (8, 10, 11) für einen Stab (9) und einer Trennsäge, insbesondere Innentrennsäge, die zum Trennen von Scheiben (9a) am einen Stabende quer zum Stab (9) vorschiebbar ist, und mit einem an einem Träger (22, 23) orientierbaren Saugkopf (21) der zum erwähnten Stabende zur Uebernahme je einer abgetrennten Scheibe (9a) zustellbar und zum Abtransport der Scheibe (9a) vom Stabende entfernbar ist, dadurch gekennzeichnet, dass der Saugkopf (21) mittels eines Kugelgelenkes (31 - 34) mit seinem Träger (22, 23) verbunden ist, welches Kugelgelenk in beliebiger Stellung blockierbar ist, dass Mittel (47, 48) zum Andrücken des Saugkopfes (21) gegen das erwähnte Stabende vorgesehen sind, und dass Steuermittel zum Zuführen von Vakuum zum Saugkopf, für die Blockierung des Kugelgelenkes (31 - 34) und zur Steuerung der Mittel (47, 48) zum Andrücken des Saugkopfes vorgesehen sind, um den Saugkopf (21) gegen das erwähnte Stabende anzudrücken bevor der Schnitt am Stab (9) vollständig ausgeführt ist, um darauf den Andruck des Saugkopfes (21) aufzuheben und das Kugelgelenk (31 - 34) zu blockieren, und um nach vollständigem Durchschneiden des Stabes (9) den Saugkopf mit der abgetrennten Scheibe (9a) vom Stabende zu entfernen.

4. Maschine nach Anspruch 3, dadurch gekennzeichnet, dass im Kugelgelenk (31-34) eine kardanische Drehsicherung (39-40) zwischen dem Saugkopf (21) und dessen Träger (22,23) vorgesehen ist.

5. Maschine nach Anspruch 3 oder 4, dadurch gekennzeichnet, dass die Mittel zur Steuerung der Andruckkraft des Saugkopfes (21) einen Druckmittelzylinder (47, 48) aufweisen.

6. Maschine nach Anspruch 5, dadurch gekennzeichnet, dass der Druckmittelzylinder (47, 48) dichtungsfrei ist und somit eine reibungsarme Bewegung des Saugkopfes (21) und der ihn tragenden Teile (22, 23, 52) erlaubt.

7. Maschine nach Anspruch 5 oder 6, dadurch gekennzeichnet, dass der Kolben (47) des Druckmittelzylinders (48) als Mutter auf einer Verstellspindel (55) sitzt, wobei der Saugkopf (21) in Anpressrichtung durch den Zylinder (48) und in entgegengesetzter Richtung durch den Kolben (47) über eine Feder (62) verschiebbar ist.

8. Maschine, insbesondere nach einem der Ansprüche 3 bis 7, dadurch gekennzeichnet, dass die Werkstückaufnahme (8) und der Saugkopf (21) während des Schnittvorgangs in starrer gegenseitiger Lage auf einem gemeinsamen Maschinengestell (1) angeordnet sind, und dass das Schneidorgan, z.B. eine Innentrennscheibe (12) den Schnittvorschub ausführt.

9. Maschine nach einem der Ansprüche 3 bis 8, dadurch gekennzeichnet, dass der Saugkopf (21) axial zum Stab (9) zustellbar und radial ausschwenkbar ist, und dass mindestens ein weiterer Uebernahmemechanismus für abzutrennende Werkstücke vorgesehen ist.

10. Maschine nach einem der Ansprüche 3 bis 9, dadurch gekennzeichnet, dass der Kranz von Saugdüsen (24) des Saugkopfes (21) bezüglich seiner Aufhängung bzw. der Wirklinie der Andruckkraft exzentrisch nach derjenigen Seite angeordnet ist, an welcher das Schneidorgan (12) in den Stab (9) eintritt.

11. Verwendung einer Trennschleifmaschine nach einem der Ansprüche 5 bis 7, dadurch gekennzeichnet, dass ein orientierbarer oder ein starrer, nicht orientierbarer Saugkopf (21) durch elastische Mitnahme (47, 48) gegen den Stab (9) bzw. ein zu entnehmendes Werkstück (9a) angelegt wird, derart, dass das Anlegen unabhängig von der Dicke der abzutrennenden Werkstücke (9a) selbsttätig erfolgt.

## Claims

1. A method for cutting a bar (9) into portions, in particular disks (9a) of constant or variable thickness, by means of a wheel cutting machine, said portions (9a) being received by a suction head (21) which is adjustably mounted on a support while the bar is cut at one of its ends transversally with respect to its longitudinal extension, and the suction head (21) with said portion (9a) being moved away from the bar (9) after the cutting is completed and the portion being detached from the suction head, characterized in that the suction head (21), which is adjustably mounted on its support (22,23) by a spherical joint and adapted to be clamped thereto and released therefrom, is pressed against the front face of said bar (9) and attached thereto by suction while being released from the support and is positioned and oriented with respect to the support (22,23) before the section of the bar (9) is completed, whereupon the abutment pressure of the suction head is relieved and the suction head (21) is clamped to i ts support (22,23).

2. A method according to claim 1, characterized in that a slide (52) which is connected to the support (22,23) is clamped to its guiding device (54) after the pressure is relieved.

3. A wheel cutting machine, in particular an internal cutting saw, for implementing the method of claim 1, comprising a workpiece support (8,10,11) for a bar (9) and a cutting saw, in particular an internal cutting saw, which is displaceable transversally with respect to said bar (9) in order to cut off disks from one end of the bar, and comprising a suction head (21) which is adjustably mounted to a support (22,23) and is adapted to be approached to said bar end in order to receive a respective cut disk (9a) and to be moved away from said bar end in order to remove said disk (9a), characterized in that the suction head (21) is connected to its support (22,23) by means of a spherical joint (31-34) which is adapted to be blocked in any position, that means (47,48) are provided for pressing the suction head (21) against said bar end, and that control means are provided for supplying vacuum to the suction head, for blocking the spherical joint (31-34), and for controlling the suction head abutting means (47,48) in order to press the suction head (21) against said bar end before the section of the bar (9) is completed, in order to subsequently relieve the abutment pressure of the suction head (21) and to block the spherical joint (31-34), and in order to move away the suction head with the cut disk (9a) from the bar end after complete section of the bar (9).

4. A machine according to claim 3, characterized in that a cardanic non-rotative connection (39-40) is provided in the spherical joint (31.-34) between the suction head (21) and its support (22,23).

5. A machine according to claim 3 or 4, characterized in that the means for the control of the abutment pressure of the suction head (21) comprise a pressure medium cylinder (47,48).

6. A machine according to claim 5, characterized in that the pressure medium cylinder (47,48) does not have a joint and thus allows a low friction movement of the suction head (21) and of the parts (22,23,52) supporting it.

7. A machine according to claim 5 or 6, characterized in that the piston (47) of the pressure medium cylinder (48) is conformed as a nut which runs on an adjusting spindle (55), the suction head (21) being displaceable in the direction of the abutment pressure by the cylinder (48) and in the opposite direction by the piston (47) via a spring (62).

8. A machine, in particular according to any one of claims 3 to 7, characterized in that the workpiece support (8) and the suction head (21) are positioned, during the cutting operation, in a fixed mutual position on a common machine frame (1), and that the cutting member, e.g. an internal cutting wheel (12), performs the cutting feed.

9. A machine according to any one of claims 3 to 8, characterized in that the suction head (21) is adapted to be approached to the bar (9) axially and to be swung out radially, and that at least another receiving mechanism for cut workpieces is provided.

10. A machine according to any one of claims 3 to 9, characterized in that the ring of suction nozzles (24) of the suction head (21) is arranged eccentrically with respect to its suspension, respectively the effective line (line of force) of the abutment force (pressure), to the side on which the cutting member (12) penetrates the bar (9).

11. Use of a wheel cutting machine according to any one of claims 5 to 7, characterized in that an adjustable or a fixed, non-adjustable suction head (21) is resiliently (47,48) fed to the bar (9), respectively to a workpiece (9a) to be removed, in such a manner that the abutment is effected automatically regardless of the thickness of the cut workpieces (9a).

**Revendications**

1. Procédé pour découper une barre (9) en pièces, en particulier en disques (9a) d'épaisseur constante ou variable au moyen d'une tronçonneuse à meule, les pièces (9a) étant, lors du découpage de la barre, reprises à l'une des extrémités de cette dernière et transversalement à son étendue longitudinale, par une tête aspirante (21) orientable sur un support, la tête aspirante (21) avec la pièce découpée (9a) étant éloignée de la barre (9) et la pièce étant détachée de la tête aspirante dès que le découpage est terminé, caractérisé en ce que la tête aspirante, orientable sur son support (22,23) par une articulation sphérique et capable d'y être bloquée et débloquée, est pressée en condition débloquée du support contre la face frontale de la barre (9) et s'attache à celle-ci par aspiration et est positionnée et orientée par rapport au support (22,23) avant que la coupe de la barre (9) ne soit entièrement effectuée, après quoi la pression d'appui de la tête aspirante est annulée et la tête aspirante (21) est bloquée sur son support (22,23).

2. Procédé selon la revendication 1, caractérisé en ce qu'un chariot (52) relié au support (22,23) est bloqué sur son guidage (54) dès que la pression est annulée.

3. Tronçonneuse à meule, en particulier intérieure, pour la réalisation du procédé selon la revendication 1, comprenant un support de pièce à travailler (8,10,11) pour une barre (9) et une scie à tronçonner, en particulier intérieure qui est déplaçable transversalement à la barre (9) pour découper des disques (9a) à l'une des extrémités de la barre, et comprenant une tête aspirante (21) orientable sur un support (22,23) et susceptible d'être approchée à ladite extrémité de la barre pour reprendre chaque fois un disque (9a) découpé et d'en être éloignée pour retirer le disque (9a), caractérisée en ce que la tête aspirante (21) est reliée à son support (22,23) par une articulation sphérique (31-34) laquelle est capable d'être bloquée dans toute position désirée, que des moyens (47,48) sont prévus pour presser la tête aspirante (21) contre ladite extrémité de la barre, et que des moyens de commande sont prévus pour l'admission de vide à la tête aspirante, pour le blocage de l'articulation sphérique (31-34) et pour la commande des moyens (47,48) d'appui de la tête aspirante, afin de presser la tête aspirante (21) contre ladite extrémité de la barre avant que la coupe de la barre (9) ne soit entièrement effectuée, afin d'annuler ensuite l'appui de la tête aspirante (21) et de bloquer l'articulation sphérique (31-34), et afin d'éloigner la tête aspirante avec le disque découpé (9 a) après entière exécution de l'opération de découpage de la barre (9) est complétée.

4. Machine selon la revendication 3, caractérisée en ce qu'une fixation à la cardan non-rotative (39-40) entre la tête aspirante (21) et son support (22,23) est prévue dans l'articulation sphérique (31-34).

5. Machine selon la revendication 3 ou 4, caractérisée en ce que les moyens de commande de la pression d'appui de la tête aspirante comprennent un cylindre manométrique (47,48).

6. Machine selon la revendication 5, caractérisé en ce que le cylindre manométrique (47,48) ne présente pas de joints et permet ainsi un mouvement à faible frottement de la tête aspirante (21) et des éléments (22,23,25) la supportant.

7. Machine selon la revendication 5 ou 6, caractérisée en ce que le piston (47) du cylindre manométrique (48) est conformé en écrou monté sur une tige de réglage (55), la tête aspirante (21) étant déplaçable dans la direction d'appui par le cylindre (48) et dans la direction opposée par le piston (47) par l'intermédiaire d'un ressort (62).

8. Machine, en particulier selon l'une des revendications 3 à 7, caractérisée en ce que le support (8) de la pièce à travailler et la tête aspirante (21) sont disposés pendant l'opération de découpage en position fixe l'une par rapport à l'autre sur un cadre de machine (1) commun, et que l'organe de coupe, par exemple une meule tronçonneuse intérieure (12), effectue l'avance du découpage.

9. Machine selon l'une des revendications 3 à 8, caractérisée en ce que la tête aspirante (21) est susceptible d'être approchée de la barre (9) axialement et pivotée radialement, et qu'au moins un mécanisme de reprise supplémentaire pour des pièces à découper est prévu.

10. Machine selon l'une des revendications 3 à 9, caractérisée en ce que la couronne de tuyères d'aspiration (24) de la tête aspirante (21) est disposé excentriquement par rapport à sa suspension, c'est-à-dire par rapport à la ligne de force de la pression d'appui, sur le côté duquel l'organe de coupe (12) rentre dans la barre (9).

11. Utilisation d'une tronçonneuse à meule selon l'une des revendications 5 à 7, caractérisée en ce qu une tête aspirante (21) orientable ou fixe, non orientable est approchée par entraînement élastique (47,48) de la barre (9) ou d'une pièce (9a) à retirer, de telle manière que l'appui s'effectue automatiquement sans égard à l'épaisseur des pièces (9a) à découper.

FIG.1

FIG. 2

EP 0 242 489 B1

EP 0 242 489 B1

FIG.3

12

FIG.4

## FIG.5

FIG.6

EP 0 242 489 B1